# EUROPÄISCHE PATENTSCHRIFT

(11) **EP 3 325 852 B1**
(45) Veröffentlichungstag und Bekanntmachung des Hinweises auf die Patenterteilung: **07.10.2020**
(21) Anmeldenummer: 16739083.0
(22) Anmeldetag: 11.07.2016
(51) Int. Cl.: F16H 61/28, F16H 59/66

(54) **SCHALTANORDNUNG UND VERFAHREN ZUM BETÄTIGEN EINES ANTRIEBSSTRANGES**
SHIFT ASSEMBLY AND METHOD FOR ACTUATING A POWERTRAIN
SYSTÈME DE CHANGEMENT DE VITESSE ET PROCÉDÉ D'ACTIONNEMENT D'UNE CHAÎNE CINÉMATIQUE

(30) Priorität: 22.07.2015 DE 102015111938
(43) Veröffentlichungstag der Anmeldung: 30.05.2018
(73) Patentinhaber: Magna PT B.V. & Co. KG, 74199 Untergruppenbach (DE)
(72) Erfinder: BUENDER, Carsten, 70563 Stuttgart (DE)
(74) Vertreter: Rausch, Gabriele
(86) Internationale Anmeldenummer: PCT/EP2016/066399
(87) Internationale Veröffentlichungsnummer: WO 2017/012897

(56) Entgegenhaltungen:
- EP-A1- 2 722 565
- DE-A1- 19 543 645
- DE-A1-102007 003 921

## Beschreibung

Die vorliegende Erfindung betrifft eine Schaltanordnung für einen eine Mehrzahl von Gangstufen aufweisenden Kraftfahrzeugantriebstranges nach dem Oberbegriff des Anspruchs 1, sowie ein Verfahren zum Betätigen einer solchen Schaltanordnung.

Derartige Schaltanordnungen werden insbesondere bei Stufengetrieben für Kraftfahrzeuge verwendet, insbesondere bei Stufengetrieben in Vorgelegebauweise, deren Gangstufen mittels an sich bekannter Schaltkupplungen wie Synchron-Schaltkupplungen geschaltet werden.

Bei solchen Schaltanordnungen sind in der Regel zwei Schaltkupplungen zu einem Schaltkupplungspaket zusammengefasst, wobei die Schaltkupplungen eines Schaltkupplungspaketes mittels einer Schaltmuffe alternativ schaltbar sind. Axialbewegungen einer solchen Schaltmuffe werden auch als Schalten bezeichnet. Das Auswählen eines bestimmten Schaltkupplungspaketes wird auch als Wählen bezeichnet.

Manuelle Schaltanordnungen beinhalten in der Regel für jedes Schaltkupplungspaket eine axial verschiebbare Schaltwelle, die mit einer zugeordneten Schaltmuffe gekoppelt ist. Die Schaltstangen können in der Regel mittels einer Schaltwelle angewählt werden, die zum Schalten verdreht oder axial versetzt wird, und zum Wählen axial versetzt oder verdreht wird. Derartige Schaltkonzepte lassen sich leicht in ein sogenanntes H-Schema abbilden, wie es auch in Kraftfahrzeugen mit manuellem Schaltgetriebe verwendet wird, und erlauben zudem sequenzielle

Schaltungen, also insbesondere Schaltungen von aufeinanderfolgenden Gangstufen, wie auch Mehrfachschaltungen, also Schaltungen, die über wenigstens eine Gangstufe hinweg erfolgen, beispielsweise von 4 nach 2 zum Einleiten eines Überholvorganges oder dergleichen.

Vorliegend werden insbesondere automatisierte Kraftfahrzeuggetriebe der beschriebenen Art angesprochen. Hierbei wird eine Schaltaktuatorik verwendet, um die Schaltkupplungen zu betätigen. Eine Schaltaktuatorik kann beispielsweise eine hydraulische Schaltaktuatorik beinhalten, bei der jeder Schaltstange ein eigener Hydraulikzylinder zugeordnet ist, der unabhängig von den anderen Zylindern ansteuerbar ist. Ferner ist es denkbar, eine Schaltwelle der oben beschriebenen Art hydraulisch in axialer Richtung zu versetzen, und in Drehrichtung ebenfalls hydraulisch oder mittels eines Elektromotors.

Ferner sind auch insgesamt elektromechanische Schaltaktuatoriken bekannt. Hierbei kann beispielsweise sowohl für das Verdrehen als auch für das Längsversetzen einer Schaltwelle jeweils ein eigener Elektromotor verwendet werden.

All die oben genannten Schaltkonzepte ermöglichen ein weitgehend wahlfreies Ein- und Auslegen von Gangstufen, also insbesondere auch Mehrfachrückschaltungen.

In manchen automatisierten Kraftfahrzeuggetrieben werden zum Schalten auch sogenannte Schaltwalzen verwendet. Diese an sich aus der Motorradgetriebetechnik bekannte Art der Schaltaktuatorik ermöglicht in der Regel nur rein sequenzielle Schaltvorgänge. Hierbei wird an einem Außenumfang einer Schaltwalze eine Schaltkontur angebracht, die mit einem Nockenfolger in Verbindung steht, der einem Schaltkupplungspaket zugeordnet ist. Mehrere derartige Nockenfolger können dabei in einer Schaltkontur vorhanden sein, es können jedoch auch mehrere Schaltkonturen nebeneinander an einer Schaltwelle angeordnet sein.

Der Vorteil einer solchen Schaltaktuatorik besteht darin, dass zum Ein- und Auslegen von Gangstufen lediglich ein einzelner Elektromotor eingesetzt werden muss, so dass die Schaltsteuerung einfach ist. Ferner kann eine derartige Schaltaktuatorik kostengünstig realisiert werden.

Nachteilig ist es, dass zum einen in der Regel weder überschneidende Schaltungen möglich sind, also sehr schnelle Gangwechsel zwischen aufeinanderfolgenden Gangstufen. Zum anderen sind jedoch insbesondere keine Mehrfachschaltungen möglich, da in der Regel nur aufeinanderfolgende Gangstufen sequenziell eingelegt werden können.

Eine weitere bekannte Schaltanordnung für ein Kraftfahrzeuggetriebe ist aus dem Dokument DE 10 2013 104 552 A1 bekannt. Hierbei ist ein Elektromotor mit Schaltkupplungen über einen speziellen Spindeltrieb gekoppelt, der es ermöglicht, dass einzelne Gangstufen wahlfrei angewählt werden können und anschließend betätigt werden können, und zwar mittels eines einzelnen Elektromotors.

DE10 2007 003 921A zeigt ein Verfahren zur Steuerung eines Automatgetriebes in einem Kraftfahrzeug, bei dem Einfachschaltungen sequentiell von einem Gang zum unmittelbar nächsten Gang und Mehrfachschaltungen von einem Gang zum zumindest übernächsten Gang in Abhängigkeit von bestimmten Betriebsgrößen des Fahrzeugs ausgelöst werden, wobei die Schaltaktuatorik nicht näher beschreiben ist.

EP2 722 565 A1, auf welcher die zweiteilige Anspruchsfassung des Anspruchs 1 basiert, beschreibt eine Schaltvorrichtung in einem Doppelkupplungsgetriebe, wobei die Schaltwalze zwei Teile aufweist. Zusätzlich zu einem ersten drehbaren Schaltwalzenteil gibt es eine "schaltbaren Schaltwalze ", nämlich mit Hilfe des axial bewegbaren zweiten Schaltwalzenteils 2b, das auf dem ersten Schaltwalzenteil 2a axial verschiebbar gelagert ist, und über die jeweilige Ansteuerung sowohl sequentielle Hoch- wie Rückschaltungen, insbesondere aber auch Mehrfach-Rückschaltungen ermöglicht.

Aus der DE 195 43 645 A1 ist bekannt, dass eine Schaltwalze sowohl drehbar als auch axial verschiebbar aufgebaut ist.

Vor dem obigen Hintergrund ist es eine Aufgabe der Erfindung, ein verbessertes Verfahren zum Betätigen eines automatisierten Kraftfahrzeugantriebsstranges sowie eine verbesserte Schaltanordnung für einen Kraftfahrzeugantriebsstrang anzugeben.

Die obige Aufgabe wird mit einer Schaltanordnung für einen eine Mehrzahl von Gangstufen aufweisenden Kraftfahrzeugantriebstranges nach Anspruch 1 sowie einem Verfahren nach Anspruch 8 gelöst.

Bei dem erfindungsgemäßen Verfahren und einer hierbei verwendbaren Schaltanordnung ist es folglich möglich, zwischen wenigstens zwei unterschiedlichen, mechanisch vorgegebenen Schaltsequenzen vorzuwählen. Beispielsweise kann für den Normalbetrieb die erste Schaltsequenz vorgewählt werden, die ein sequenzielles Schalten zwischen aufeinanderfolgenden Gangstufen ermöglicht.

Sobald eine Situation auftritt, bei der ausgehend von einem aktuellen Fahrzustand eine Mehrfachschaltung gewünscht ist, kann auf die weitere Schaltsequenz umgeschaltet werden, so dass diese vorgewählt ist. In diesem Fall kann dann eine Mehrfachschaltung sehr schnell durchgeführt werden, da es nicht notwendig ist, eine dazwischenliegende Gangstufe zwischenzeitlich zu synchronisieren, einzulegen und wieder auszulegen, wie es bei einer sequenziellen Schaltsequenz von aufeinander folgenden Gangstufen unabdingbar ist.

Demzufolge können Mehrfachrückschaltungen deutlich schneller durchgeführt werden.

Die mechanisch vorgegebene Schaltsequenz kann beispielsweise eine Zwangsführung sein, wie bei einer Schaltwalze. Die mechanisch vorgegebene Schaltsequenz kann jedoch auch beispielsweise durch die Reihenfolge von Schaltnocken definiert sein, die bei einer Drehung einer Schaltwelle in der Folge in Schalteingriff gelangen, also jeweils eine Schaltung durchführen.

Der Kraftfahrzeugantriebsstrang weist vorzugsweise ein Stufengetriebe auf, insbesondere in Form eines Vorgelegegetriebes, bei dem die Schaltaktuatorik Schaltkupplungen wie Synchron-Schaltkupplungen betätigt. Der Kraftfahrzeugantriebsstrang weist vorzugsweise eine Steuereinrichtung auf, mittels der die Schaltaktuatorik angesteuert wird.

Die Anzahl der mit der ersten Schaltsequenz schaltbaren Gangstufen ist vorzugsweise größer als 2 und kleiner als 11 , insbesondere größer als 4. Die vordefinierte Teilmenge der Gangstufen, die von der weiteren mechanisch vorgegebenen Schaltsequenz bedient wird, beinhaltet wenigstens zwei, bevorzugt jedoch drei oder vier Gangstufen. Bei diesen Rechnungen wird generell auf Vorwärtsgangstufen abgestellt.

Die bei üblichen Fahrvorgängen vorkommenden Schaltmuster beinhalten häufig eine Rückschaltung über zwei Gangstufen hinweg (beispielsweise von 7 nach 4 oder von 5 nach 2), wobei in der Folge dann häufig die sich daran wieder nach oben anschließende Gangstufe geschaltet wird (also beispielsweise von 4 nach 5 oder von 2 nach 3). Diese Schaltungen bilden typische Beschleunigungsvorgänge ab, wie sie beispielsweise auf Landstraßen durchgeführt werden. Demzufolge ist es bevorzugt, wenn die Teilmenge der Gangstufen genau drei Gangstufen aufweist, die in der Reihenfolge (i) Quellgangstufe, (ii) Zwischengangstufe über zwei Gangstufen nach unten hinweg, und nach oben an die Mittelgangstufe anschließende (iii) Zielgangstufe in Eingriff gelangen bzw. geschaltet werden.

Sofern die Schaltaktuatorik zur Definition der Schaltsequenzen eine Schaltwelle mit über den Umfang verteilten Nocken beinhaltet, so ist es bevorzugt, wenn die Schaltwelle dazu ausgebildet ist, Schaltvorgänge in einer ersten Drehrichtung durchzuführen. In der entgegengesetzten Drehrichtung ist es für diesen Fall bevorzugt, wenn die Schaltaktuatorik eine Freilaufeigenschaft beinhaltet, wie es in der deutschen Patentanmeldung DE 10 2014 103 523 und deren Familienmitglieder offenbart ist.

Weitere Schaltanordnungen, die generell nach diesem Grundprinzip arbeiten, sind in den Dokumenten DE 10 2014 115 373 sowie DE 10 2014 115 371 offenbart.

Gemäß einer besonders bevorzugten Ausführungsform ist der weitere Betriebsparameter, in Abhängigkeit von dem entweder die eine Schaltsequenz oder die weitere Schaltsequenz vorgewählt wird, ein prädiktiver Betriebsparameter. Unter einem prädiktiven Betriebsparameter wird vorliegend ein Parameter verstanden, der in der Zukunft liegende Fahrsituationen vorhersagt. Die Prädiktion kann dabei anhand diverser Sensorik erfolgen, wie beispielsweise Navigationssensorik, Datenmaterial über die zu befahrende Fahrstrecke, Umweltsensorik und/oder Kommunikation mit anderen Fahrzeugen oder stationären Informationsabgabevorrichtungen.

Durch diese Maßnahme ist es möglich, in Abhängigkeit von dem prädiktiven Betriebsparameter beispielsweise die weitere Schaltsequenz vorzuwählen, wenn der Betriebsparameter angibt, dass vor einem eine enge Kurvenkombination liegt, oder eine Steigung oder ein sehr langsames Fahrzeug, das zu überholen ist.

Wenn der Betriebsparameter hingegen angibt, dass im Wesentlichen eine stationäre Fahrt mit geringen Geschwindigkeitsänderungen in Aussicht steht, wird die erste Schaltsequenz angewählt, mit der vorzugsweise nur Nachbargangstufen aufeinanderfolgend geschaltet werden können.

Der Betriebsparameter kann im einfachsten Fall ein digitaler Betriebsparameter sein. Der Betriebsparameter kann eine Funktion von einem oder einer Mehrzahl von prädiktiven Unter-Betriebsparametern sein, die von unterschiedlichen Sensoren oder Informationsstellen erzeugt oder hieraus abgeleitet werden.

Von besonderem Vorzug ist es, wenn der weitere Betriebsparameter ausgebildet ist aus einem oder einer Kombination der folgenden Parameter: Richtungswechsel, Kurvenfahrt, absolute Höhe, Höhendifferenz, Fahrbahn-Steigungsvorzeichen, Fahrbahn-Steigungswinkel, Straßenart (Autobahn, Schnellstraße etc.), Straßenumfeld (Land, Dorf, Stadt etc.), Geschwindigkeitsbegrenzung, Fahrmodus (Eco, Sport, etc.), GPS-Parameter (einer einprogrammierten Wegstrecke etc.), Interfahrzeugkommunikation (mit wenigstens einem anderen Fahrzeug), Kommunikation mit stationären Informationsabgabestellen (Verkehrsflussleitsysteme, etc.), aktuelle Gaspedalstellung (z.B. Kick-Down), etc.

Ein oder mehrere Parameter können jeweils aktuelle Parameter sein, können jedoch auch prädiktive Betriebsparameter sein, derart, dass die Vorwahl einer Schaltsequenz antizipierend erfolgen kann. Der Betriebsparameter kann ein prädiktiver Betriebsparameter sein, der insbesondere gangschaltrelevante Informationen berücksichtigt, wie sie oben beispielhaft aufgeführt sind. Ferner können alternativ oder akkumulativ ein oder mehrere Parameter "Vergangenheits"-Parameter sein, die Ereignisse aus der Vergangenheit reflektieren, wie beispielsweise historische Verkehrsdaten.

Bei der Schaltdrehanordnung kann es sich beispielsweise um eine Schaltwelle oder eine Schaltwalze handeln. Die Schaltmerkmale können beispielsweise Schaltnocken oder Kurvenabschnitte einer Schaltkontur einer Schaltwalze sein. Das sequenzielle Schalten von Gangstufen erfolgt vorzugsweise bei einer Drehung der Schaltdrehanordnung in einer Richtung (Schaltdrehrichtung).

Die Schaltdrehanordnung kann ein einzelnes um eine Achse drehbares Schaltdrehglied wie eine Schaltwalze oder eine Schaltwelle beinhalten. Die Schaltdrehanordnung kann jedoch auch unabhängig voneinander drehbare Schaltdrehglieder beinhalten.

Von besonderem Vorzug ist es hierbei, wenn die Basis-Schaltmerkmale und die Zusatz- Schaltmerkmale an der Schaltdrehanordnung in Umfangsrichtung benachbart oder beabstandet zueinander angeordnet sind.

Bei dieser Ausgestaltung erfolgt das Vorwählen der jeweiligen Schaltsequenz durch eine Drehbewegung der Schaltdrehanordnung.

Gemäß der erfindungsgemäßen Ausgestaltung sind die Basis-Schaltmerkmale und die Zusatz- Schaltmerkmale an der Schaltdrehanordnung in axialer Richtung beabstandet oder benachbart zueinander angeordnet.

Bei dieser Ausführungsform erfolgt eine Vorwahl der jeweiligen Schaltsequenz vorzugsweise durch axiales Versetzen der Schaltdrehanordnung.

Wie oben erwähnt, kann die Schaltdrehanordnung ein einzelnes Schaltdrehglied aufweisen. Von besonderem Vorzug ist es jedoch, wenn die Schaltdrehanordnung zwei Schaltdrehglieder aufweist, die unabhängig voneinander drehbar sind, wobei Basis- Schaltmerkmale an wenigstens einem Schaltdrehglied ausgebildet sind und wobei Zusatz-Schaltmerkmale an dem anderen Schaltdrehglied ausgebildet sind. Insgesamt kann es ferner vorteilhaft sein, wenn die Schaltaktuatorik eine Schaltwalze mit wenigstens einer Schaltkontur aufweist.

Die Schaltaktuatorik kann dabei eine weitere Schaltsequenz entweder in Umfangsrichtung anschließend oder parallel versetzt in Form einer weiteren Schaltkontur oder dergleichen aufweisen. Ferner kann die Schaltaktuatorik mehr als eine Schaltwalze aufweisen, beispielsweise zwei unabhängig voneinander drehbare Schaltwalzen, insbesondere für zwei Teilgetriebe eines Doppelkupplungsgetriebes. Gemäß einer weiteren bevorzugten Ausführungsform weist die Schaltaktuatorik eine Schaltwelle mit in Axialrichtung und in Umfangsrichtung verteilt angeordneten Schaltnocken auf.

Die Schaltwelle kann eine einzelne Schaltwelle sein, kann jedoch auch aus zwei oder mehr unabhängig voneinander drehbaren Schaltwellenabschnitten bestehen.

So ist es bevorzugt, wenn die Schaltwelle in einer Drehrichtung zum Durchführen eines Schaltvorganges verdrehbar ist und in der anderen Drehrichtung zum Durchführen eines Wählvorganges verdrehbar ist.

Die Schaltnocken sind dabei in Bezug auf Schaltglieder zum Betätigen von Schaltkupplungen so angeordnet, dass sie diese Schaltglieder durch eine Schubbewegung in eine Richtung betätigen können, wobei am Ende eines derart durchgeführten Schaltvorganges die Nocken vorzugsweise unter den Schaltgliedern durchtauchen können, so dass bei fortgesetzter Drehung der Schaltwelle in der gleichen Drehrichtung (Schaltdrehrichtung) die jeweiligen Schaltsequenzen durchgeführt werden (je nachdem, welche angewählt ist).

Insgesamt ist es vorteilhaft, wenn an der Schaltwelle Basis-Schaltnocken zum Einrichten der einen Schaltsequenz sowie Zusatz-Schaltnocken zur Einrichtung der weiteren Schaltsequenz ausgebildet sind.

Femer ist es vorteilhaft, wenn die Schaltwelle in einer Drehrichtung zum Durchführen eines Schaltvorganges verdrehbar ist. In bevorzugten Ausführungsformen kommen bei einem Weiterdrehen der Schaltwelle nacheinander die jeweiligen Gangstufen der jeweiligen Schaltsequenz in Eingriff.

Bevorzugt ist es jedoch auch, wenn in der anderen Drehrichtung ein Wählvorgang durchgeführt werden kann.

Bevorzugt ist es folglich, wenn eine Schaltwelle Schalt- bzw. Einlegenocken aufweist, wobei nach dem Einlegen eines Ganges bei Weiterdrehen der Schaltwelle ohne Wählvorgang (das heißt ohne Zurückdrehen der Schaltwelle) der nächste Nocken eine zugehörige Schaltstange (beispielsweise eine Schubstange) betätigt und den entsprechenden Gang einlegen kann.

Insbesondere können bei Doppelkupplungsgetrieben auch zwei Gangstufen gleichzeitig eingelegt sein.

Bevorzugt ist es bei der Erfindung, wenn bei einer solchen Ausgestaltung jeder Schaltstange bzw. Schubstange nicht nur ein Schaltnocken, sondern wenigstens ein weiterer Zusatz-Schaltnocken zugeordnet ist, so dass vorzugsweise mehrere zeitkritische Schaltungen sehr schnell ausgeführt werden können, da ein Wählvorgang (Zurückdrehen der Schaltwelle bei dieser Ausführungsform) entfallen kann.

Solche zeitkritischen Schaltungen können Einfach-Rückschaltungen sein, gestützte Mehrfach-Rückschaltungen, aber auch Mehrfach-Zug-Hochschaltungen bei kurz abgestuften unteren Gängen oder auch nicht gestützte Mehrfach-Rückschaltungen.

Es ist folglich möglich, Schaltsequenzen vorzudefinieren und vorzuwählen. Mit anderen Worten kann beispielsweise bei einer Mehrfachrückschaltung nach einem Einlegen einer oberen Gangstufe (zum Beispiel Gangstufe 5) unmittelbar eine über wenigstens eine Gangstufe beabstandete weitere Gangstufe (zum Beispiel Gangstufe 2) eingelegt werden. In diesem Fall ist es bevorzugt, wenn eine Schaltwelle zu diesem Zweck weitergedreht wird, wobei der Schaltnocken für die Gangstufe 5 nach dem Einlegen unter seiner zugeordneten Schaltstange wegtauchen kann.

Das Konzept, Schaltsequenzen vorzuwählen, kann insbesondere beim Vorliegen von Fahrstreckeninformationen (Einbindung von GPS-Daten, vernetztes Fahren, etc.) Bedeutung haben. Die Mehrfachanordnung von Schaltnocken führt unter Umständen zu einer geringfügigen Vergrößerung des Packages (beispielsweise Durchmesser der Schaltwelle bzw. des Schaltzylinders), was jedoch unkritisch ist.

Insgesamt können zeitkritische Schaltzeiten verkürzt werden. Es kann sich insbesondere eine Verbesserung der Sicherheit ergeben, zum Beispiel bei Überholmanövern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines Kraftfahrzeugantriebsstranges in einem Kraftfahrzeug, das auf einer Wegstrecke fährt, wobei der Antriebsstrang eine Ausführungsform einer erfindungsgemäßen Schaltanordnung beinhaltet;
Fig. 2 eine schematische Darstellung einer weiteren Ausführungsform eines Antriebsstranges für ein Kraftfahrzeug mit einer weiteren Ausführungsform einer erfindungsgemäßen Schaltanordnung;
Fig. 3 eine Schnittansicht entlang der Linie III-III der Fig. 2;
Fig. 4 eine der Fig. 3 vergleichbare Darstellung einer weiteren Ausführungsform einer erfindungsgemäßen Schaltanordnung vor dem Einlegen einer Gangstufe;
Fig. 5 eine der Fig. 4 vergleichbare Darstellung während des Einlegens der Gangstufe;
Fig. 6 eine der Fig. 4 vergleichbare Darstellung nach dem Einlegen der Gangstufe und vor dem Einlegen einer weiteren Gangstufe, die aufgrund einer vorgewählten Schaltsequenz als nächstes geschaltet wird; und
Fig. 7 eine schematische Darstellung einer weiteren Ausführungsform eines Antriebsstranges mit einer weiteren Ausführungsform einer erfindungsgemäßen Schaltanordnung, die eine Schaltwalze beinhaltet.

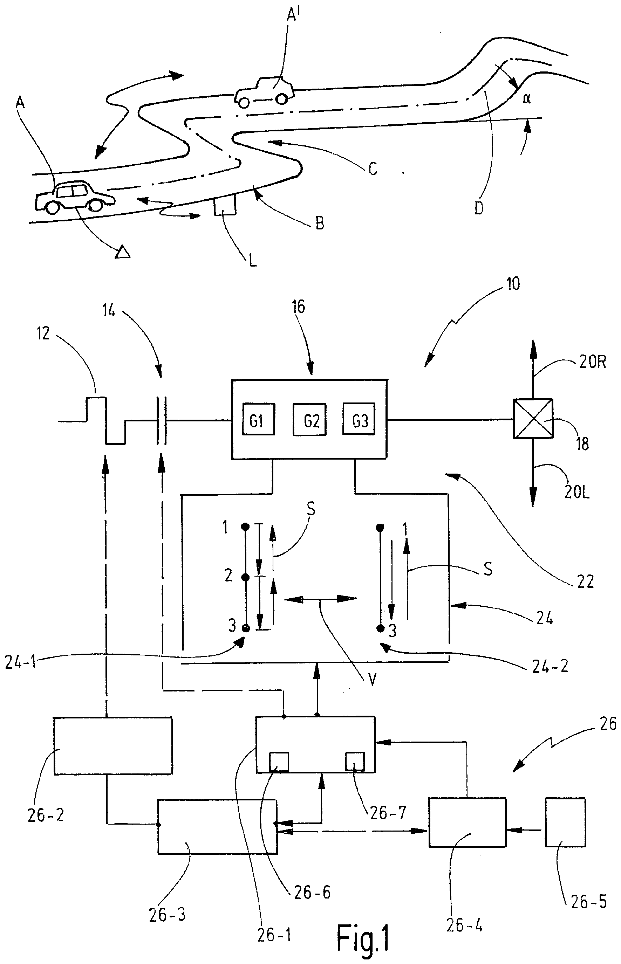

In Fig. 1 ist ein Kraftfahrzeug A gezeigt, das auf einer Fahrbahn B fährt, die eine Kurve C sowie eine Steigung D mit einem Winkel α beinhaltet. In Fig. 1 ist auf der Fahrbahn B ferner ein weiteres Fahrzeug A' gezeigt, das über eine nicht näher bezeichnete Kommunikation optional mit dem Fahrzeug A in Verbindung stehen kann. Das Fahrzeug A weist einen Antriebsstrang 10 auf, der ebenfalls in Fig. 1 schematisch dargestellt ist. Der Antriebsstrang 10 beinhaltet einen Antriebsmotor 12 wie einen Verbrennungsmotor oder eine Hybrid-Antriebseinheit, oder auch einen Elektromotor. Ferner weist der Antriebsstrang 10 eine Kupplungsanordnung 14 auf, die eine einfache Kupplung beinhalten kann, oder eine Doppelkupplungsanordnung. Ausgangsseitig ist die Kupplungsanordnung 14 mit einem Kraftfahrzeuggetriebe 16 verbunden, das als Stufengetriebe ausgebildet ist und vorliegend drei Gangstufen G1 , G2, G3 beinhaltet. Ein Ausgang des Kraftfahrzeuggetriebes 16 ist mit einem Differenzial 18 verbunden, mittels dessen Antriebsleistung auf angetriebene Räder 20L, 20R verteilbar ist.

Der Antriebsstrang 10 beinhaltet ferner eine Schaltanordnung 22, die zum Ein- und Auslegen der Gangstufen des Kraftfahrzeuggetriebes 16 dient. Die Schaltanordnung 22 ist als automatisierte Schaltanordnung mit einer Schaltaktuatorik 24 ausgebildet. Die Schaltaktuatorik weist eine erste mechanisch vorgegebene Schaltsequenz 24-1 auf, die Gangwechsel nur sequenziell zwischen benachbarten Gangstufen erlaubt, wobei die Schaltaktuatorik 24 mittels einer Steueranordnung 26 so angesteuert wird, dass im Fahrbetrieb jeweils eine der Gangstufen 1-3 geschaltet ist. Ferner weist die Schaltaktuatorik wenigstens eine weitere mechanisch vorgegebene Schaltsequenz 24-2 für eine vordefinierte Teilmenge der Gangstufen auf. Vorliegend besteht die Teilmenge der Gangstufen aus den Gangstufen 1 und 3. Die weitere Schaltsequenz ermöglicht folglich wenigstens eine Mehrfachschaltung, die zwischen nicht benachbarten Gangstufen erfolgt. Die Schaltaktuatorik 24 wird ebenfalls von der Steueranordnung 26 angesteuert.

Zwischen der ersten Schaltaktuatorik 24-1 und der zweiten Schaltaktuatorik 24-2 kann in der Schaltaktuatorik 24 eine Vorauswahl V erfolgen, so dass die Gangstufen des Kraftfahrzeuggetriebes 16 entweder mittels der ersten Schaltsequenz 24-1 oder mittels der zweiten Schaltsequenz 24-2 geschaltet werden.

Die Steueranordnung 26 beinhaltet ein Getriebesteuergerät 26-1, das die Schaltaktuatorik 22 ansteuert. Ferner beinhaltet die Schaltanordnung 26 vorzugsweise ein Motorsteuergerät 26-2. Das Getriebesteuergerät 26-1 und das Motorsteuergerät 26-2 können mittels eines übergeordneten Steuergerätes 26-3 koordiniert werden. Bei 26-4 ist in schematischer Form eine Erfassungseinrichtung gezeigt, die wenigstens einen Zustand bzw. Parameter des Fahrbetriebes des Fahrzeugs A erfasst und dem Getriebesteuergerät 26-1 zuführt, und gegebenenfalls auch dem übergeordneten Steuergerät 26-3, wie es durch eine gestrichelte Linie dargestellt ist.

Die Erfassungseinrichtung 26-4 kann mit einem GPS-Steuergerät 26-5 verknüpft sein.

Aus den mittels der Erfassungseinrichtung 26-4 in dem Getriebe-Steuergerät 26-1 erfassten Daten wird ein erster Betriebsparameter 26-6 abgeleitet. Sofern eine Schaltsequenz 24-1 oder 24-2 vorgewählt ist, erfolgen Gangwechsel innerhalb dieser jeweiligen Schaltsequenz in Abhängigkeit von dem ersten Betriebsparameter 26-6. Der Betriebsparameter 26-6 kann aus einer Mehrzahl von Unter-Betriebsparametern zusammengesetzt sein.

Aus den über die Erfassungseinrichtung 26-4 erfassten Daten ermittelt das Getriebe-Steuergerät 26-1 ferner einen zweiten Betriebsparameter 26-7. Der zweite Betriebsparameter 26-7 ist vorzugsweise ein prädiktiver Betriebsparameter. Anhand des zweiten Betriebsparameters 26-7 erfolgt die Vorauswahl V, ob also Schaltungen mittels der ersten oder der zweiten Schaltsequenz durchgeführt werden.

Der zweite Betriebsparameter kann ausgewählt sein aus einem oder einer Kombination der folgenden Parameter: Richtungswechsel, Kurvenfahrt, absolute Höhe, Höhendifferenz, Steigungsvorzeichen, Steigungswinkel , Straßenart, Straßenumfeld, Geschwindigkeitsbegrenzung, Fahrmodus, GPS-Parameter (beispielsweise in Abhängigkeit von eingegebener und aktiver Route), Interfahrzeugkommunikation zwischen A und A', aktuelle Gaspedalstellung (zum Beispiel Kick-down für Überholvorgang), etc.

Mit dem Antriebsstrang 10 des Kraftfahrzeuges A können folglich Schaltsequenzen prädiktiv in Abhängigkeit von in der Zukunft liegenden Ereignissen vorgewählt werden, beispielsweise vor einer Kurve C oder vor einer Steigung D. Ferner kann gegebenenfalls ein Überholvorgang antizipiert werden, beispielsweise unter Zuhilfenahme von GPS-Daten und von Interfahrzeugkommunikation. Auch können weitere Informationen für die Vorauswahl der Schaltsequenz berücksichtigt werden, beispielsweise über stationäre Informationsgeber wie Fahrzeugleitsysteme L, die über eine Kommunikationseinrichtung mit dem Fahrzeug A in Verbindung stehen.

Die Kommunikationseinrichtung kann beispielsweise Teil des übergeordneten Steuergerätes 26-3 sein.

In den nachfolgenden Figuren sind weitere Ausführungsformen von Antriebssträngen von Kraftfahrzeugen bzw. Steueranordnungen hierfür gezeigt, die hinsichtlich Aufbau und Funktionsweise generell der Ausführungsform der Fig. 1 entsprechen. Gleiche Elemente sind daher durch gleiche Bezugszeichen gekennzeichnet. Im Folgenden werden im Wesentlichen die Unterschiede erläutert.

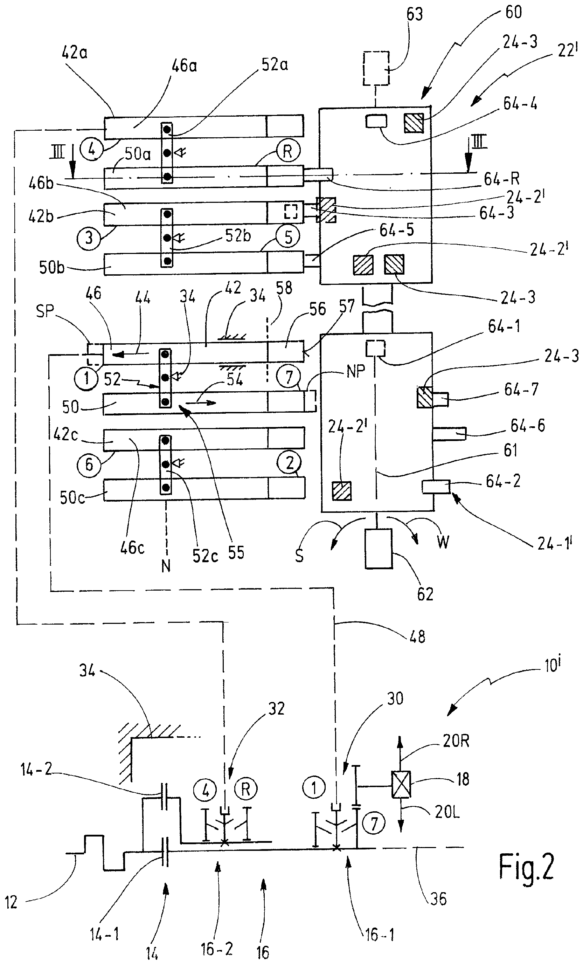

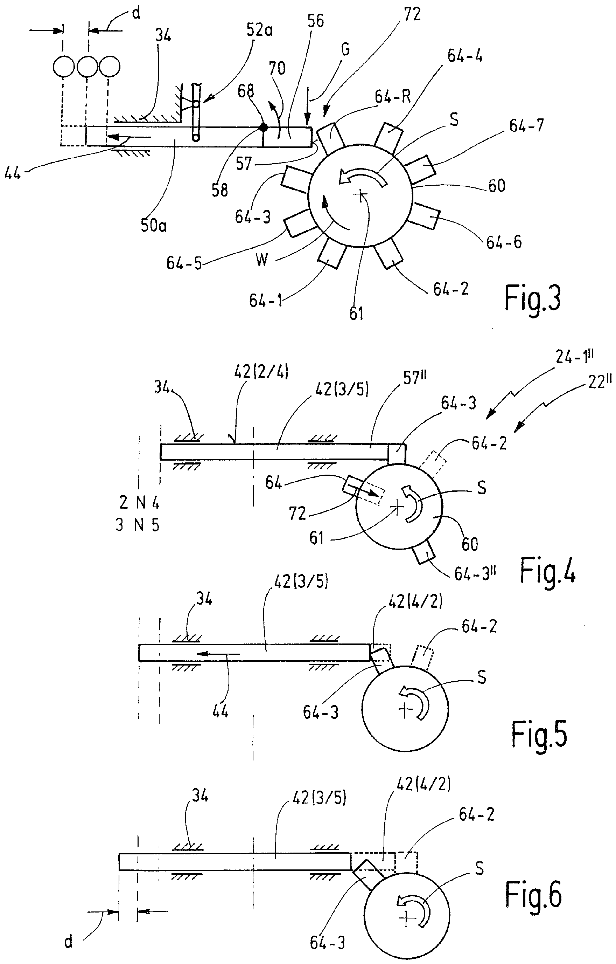

In den Figuren 2 und 3 ist eine Steueranordnung 22' gezeigt, die einem Antriebsstrang 10' zugeordnet ist. Bei dem Antriebsstrang 10' beinhaltet die Kupplungsanordnung 14 eine erste Reibkupplung 14-1 für die ungeraden Gangstufen und eine zweite Reibkupplung 14-2 für die geraden Gangstufen des Getriebes 16. In entsprechender Weise beinhaltet das Getriebe 16 ein erstes Teilgetriebe 16-1 für die ungeraden Gangstufen und ein zweites Teilgetriebe 16-2 für die geraden Gangstufen.

Aus Ubersichtsgründen sind nur einige der Gangstufen des Kraftfahrzeuggetriebes 16 dargestellt. Das erste Teilgetriebe 16-1 beinhaltet eine erste Schaltkupplungsanordnung 30, mittels der beispielsweise die Gangstufen 1 und 7 schaltbar sind. Ferner beinhaltet das zweite Teilgetriebe 16-2 eine zweite Schaltkupplungsanordnung 32, mittels der beispielsweise die Gangstufen 4 und R schaltbar sind. Es versteht sich, dass das erste Teilgetriebe 16-1 weitere Gangstufen 3, 5 und gegebenenfalls 9 aufweisen kann, und das zweite Teilgetriebe 16-2 weitere Gangstufen 2, 6 und gegebenenfalls 8 beinhalten kann.

Das Kraftfahrzeuggetriebe 16 ist als Stufengetriebe in Vorgelegebauweise ausgeführt. Die Schaltkupplungsanordnungen 30 dienen jeweils zum Verbinden von den Gangstufen zugeordneten Losrädern mit einer jeweiligen Getriebewelle. Ein gemeinsamer Ausgang der zwei Teilgetriebe 16-1, 16-2 ist mit einem Eingangsglied des Differenzials verbunden.

In Fig. 2 ist ferner angedeutet, dass der Antriebsstrang 10' ein Gehäuse 34 aufweisen kann, das insbesondere als Getriebegehäuse ausgebildet sein kann. Der Antriebsstrang 10' definiert eine Längsachse 36, wobei insbesondere Wellen des Getriebes 16 parallel zu dieser Längsachse 36 angeordnet sind.

Die zwei Reibkupplungen 14-1, 14-2 werden vorzugsweise automatisiert betätigt, mittels geeigneter Aktuatoren, die in Fig. 2 jedoch nicht dargestellt sind. Zum Betätigen der Gangstufen des Getriebes 16 ist eine Schaltanordnung 22' vorgesehen, die in Fig. 2 schematisch dargestellt ist.

Die Schaltanordnung 22' beinhaltet eine Schubstange 42 für die Gangstufe 1. Die Schubstange 42 ist axial verschieblich in Bezug auf das Gehäuse 34 gelagert. Die Schubstange 42 ist in Fig. 2 in einer Neutralposition N gezeigt und ist in einer ersten Längsrichtung 44 versetzbar, wodurch die Gangstufe 1 eingelegt wird. Zu diesem Zweck weist die Schubstange 42 einen Schaltkupplungs-Betätigungsabschnitt 46 auf, der über eine Schaltkupplungs-Kopplung 48 mit der ersten Schaltkupplungsanordnung 30 gekoppelt ist.

Die Schaltanordnung 22' weist eine weitere Schubstange 50 auf, die der Gangstufe 7 funktional zugeordnet ist, also einer Gangstufe, die der gleichen Schaltkupplungsanordnung 30 zugeordnet ist wie die Gangstufe 1. Die weitere Schubstange 50 ist über eine Koppeleinrichtung 52 mit der Schubstange 42 derart gekoppelt, dass die Stange 42 und die weitere Stange 50 zwangsweise gegensinnig in axialer Richtung verschiebbar sind. Die Koppeleinrichtung 52 ist dabei insbesondere als zweiseitiger Hebel ausgebildet, der einen gehäusefesten Hebelschwenkpunkt aufweist. Ein Versetzen der Schubstange 42 in der ersten Längsrichtung 44 führt folglich zwangsweise mittels der Koppeleinrichtung 52 zu einem Versetzen der weiteren Schubstange 50 in einer zweiten Längsrichtung 54, die entgegengesetzt ist zu der ersten Längsrichtung 44. Sofern die Schubstange 42 aus der in Fig. 1 mit durchgezogenen Linien gezeigten Neutralposition N in der ersten Längsrichtung 44 in eine Schaltposition SP bewegt wird, wird die über die Koppeleinrichtung 52 gekoppelte weitere Schubstange 50 in der zweiten Längsrichtung 54 in eine Nicht- Schaltposition NP bewegt.

Um beispielsweise nach einem Einlegen der Gangstufe 1 , bei der die Schubstange 42 in die Schaltposition SP bewegt ist, diese Schubstange 42 wieder in die Neutralposition N zu bewegen, ist die weitere Schubstange folglich in der ersten Längsrichtung 44 zu bewegen, wodurch die Schubstange 42 mittels der Koppeleinrichtung 52 in der zweiten Längsrichtung 54 in Richtung der Neutralposition N bewegt wird. Diese Ausgestaltung bildet eine Rückholeinrichtung 55 für die Schubstange 42.

Die Schubstange 42 für die Gangstufe 1 und die weitere Stange 50 für die Gangstufe 7 bilden ein Schubstangen-Paar der Schaltanordnung 22'. Für die anderen Gangstufen sind weitere Schubstangen-Paare vorgesehen, nämlich eine Schubstange 42a für die Gangstufe 4 und eine weitere Schubstange 50a für die Gangstufe R, wobei diese Schubstangen über eine Koppeleinrichtung 52a miteinander gekoppelt sind. Die Schaltanordnung 22' beinhaltet ferner eine Schubstange 42b für die Gangstufe 3 und eine weitere Schubstange 50b für die Gangstufe 5, die über eine Koppeleinrichtung 52b miteinander gekoppelt sind. Ferner beinhaltet die Schaltanordnung 22' eine Schubstange 42c für die Gangstufe 6 und eine weitere Schubstange 50c für die Gangstufe 2, die über eine Koppeleinrichtung 52c miteinander gekoppelt sind. Die Funktionsweise der jeweiligen Schubstangen-Paare ist jeweils identisch. Jedes Schubstangen-Paar ist einem der zwei Teilgetriebe 16-1 , 16-2 des Getriebes 16 zugeordnet. Die Schubstangen-Paare 42, 50 sowie 42b, 50b sind dem ersten Teilgetriebe 16-1 zugeordnet. Die Schubstangen-Paare 42a, 50a sowie 42c, 50c sind dem zweiten Teilgetriebe 16-2 zugeordnet.

An ihrem in die zweite Längsrichtung 54 weisenden Ende beinhalten die Schubstangen jeweils vorzugsweise einen verschwenkbaren Abschnitt 56. Der verschwenkbare Abschnitt 56 weist an seiner axialen Stirnseite einen Nockenfolgerabschnitt 57 auf und ist um eine Schwenkachse 58 verschwenkbar, die quer, insbesondere senkrecht zu der Längsachse 36 ausgerichtet ist.

Die Schaltanordnung 22' beinhaltet ferner eine Schaltwelle bzw. Nockenwelle 60, die eine Schaltwellenachse 61 aufweist, die ebenfalls quer zu der Längsachse 36 ausgerichtet ist, insbesondere parallel zu den Schwenkachsen 58 der verschwenkbaren Abschnitte 56 der Schubstangen 42, 50.

Die Schaltwelle 60 ist mittels eines einzelnen Elektromotors 62 bidirektional antreibbar, und zwar entweder in einer ersten Drehrichtung S (Schaltrichtung) oder in einer zweiten Drehrichtung W (Wählrichtung).

Alternativ hierzu kann die Schaltwelle 60 durch zwei Schaltwellenabschnitte gebildet sein, die jeweils mittels eigener Elektromotoren angetrieben sind, was in Fig. 2 durch einen zweiten Elektromotor 63 angedeutet ist.

Die Schubstangen 42, 50 sind in einer gemeinsamen Ebene angeordnet, die parallel zu der Schaltwellenachse 61 ausgerichtet ist, insbesondere parallel versetzt hierzu.

An der Schaltwelle 60 ist eine Mehrzahl von Schaltnocken 64 ausgebildet, die jeweils einer der Schubstangen 42, 50 bzw. einer der Gangstufen des Stufengetriebes zugeordnet sind. Mit anderen Worten sind die Schaltnocken 64, die in Fig. 2 mit einem Suffix versehen sind, der der Gangstufe entspricht, denen sie jeweils zugeordnet sind, entlang der Schaltwellenachse 61 so verteilt angeordnet, dass sie jeweils mit der Längserstreckung der ihnen zugeordneten Schubstange 42 bzw. 50 ausgerichtet sind.

Ferner sind die Schaltnocken 64 über den Umfang der Schaltwelle 60 verteilt angeordnet. In der in Fig. 2 gezeigten Draufsicht ist der Schaltnocken 64-4 beispielsweise nach oben ausgerichtet, und der Schaltnocken 64-1 beispielsweise nach unten. Ferner ist in Fig. 1 schematisch angedeutet, dass der Schaltnocken 64-R an dem Nockenfolgeabschnitt 57 der weiteren Schubstange 50a für die Rückwärtsgangstufe R anliegt. Der Schaltnocken 64-5 ist schräg nach unten gerichtet, und der Schaltnocken 64-3 ist in der Darstellung der Fig. 2 unterhalb der zugeordneten Schubstange 62b angeordnet.

Die verschwenkbaren Abschnitte 56 der Schubstangen 42, 50 sind jeweils über ein schematisch angedeutetes Scharnier 68 (siehe Fig. 3) oder dergleichen verschwenkbar an einem Grundkörper der jeweiligen Schubstange 42, 50 verschwenkbar angelenkt. Das Scharnier 68 ist dabei so ausgebildet, dass es in Abhängigkeit von der Einbaulage in dem Stufengetriebe 16 dafür sorgt, dass der verschwenkbare Abschnitt 56 aufgrund von Gravitationskräften G generell in einer Ausrichtung bzw. Lage ist, bei der er mit dem Grundkörper der jeweiligen Schubstange 42, 50 ausgerichtet ist, wie es in Fig. 3 dargestellt ist. Anstelle oder zusätzlich zu den Gravitationskräften G können Federn vorgesehen sein, um den verschwenkbaren Abschnitt 56 in die in Fig. 2 dargestellte Grundposition zu versetzen.

In dieser Grundposition liegt der verschwenkbare Abschnitt 56 so an dem Grundkörper der jeweiligen Schaltstange 42, 50 an, dass auf den verschwenkbaren Abschnitt 56 (genauer: dessen Nockenfolgeabschnitt 57) ausgeübte Axialkräfte in Richtung der ersten Längsrichtung 44 auf den Grundkörper der jeweiligen Schubstange 42, 50 übertragen werden können. Fig. 3 zeigt eine Position, bei der sich der Schaltnocken 64-R in einer Drehposition befindet, bei der er an dem Nockenfolgeabschnitt 57 der Schubstange 50a für die Rückwärtsgangstufe R anliegt. Ein Verdrehen der Schaltwelle 60 in der Schaltrich- tung S führt dann zu einem Axialversatz der Schubstange 50a in der ersten Längsrichtung 44, um auf diese Weise aus der in Fig. 3 gezeigten Neutralposition N die Rückwärtsgangstufe R einzulegen.

Zuvor ist die Schubstange 50a der Rückwärtsgangstufe R als jene Schubstange angewählt worden, die einer Zielgangstufe (hier Rückwärtsgangstufe) entspricht. Dies ist durch einen Wählvorgang erfolgt, bei dem die Schaltwelle 60 in einer zweiten Drehrichtung W verdreht worden ist, wie es in Fig. 3 angedeutet ist. Hierbei ist die Schaltwelle 60 verdreht worden, bis der Nocken 64-R sich auf der Seite des Nockenfolgeabschnittes 57 der Schubstange 50a befunden hat.

Auf dem Weg in diese Position ist es bei dem Verdrehen der Schaltwelle 60 in der zweiten Drehrichtung W zu einer Anlage des Schaltnockens 64-R an der Unterseite des verschwenkbaren Abschnittes 56 der zugeordneten Schaltstange gekommen. Genauer gesagt hat der Schaltnocken 64-R aufgrund der Wählbewegung W an der Unterseite des verschwenkbaren Abschnittes 56 angegriffen und diesen verschwenkt, so dass der Abschnitt 56 eine Ausweichbewegung vollzogen hat, um den Wählvorgang zu ermöglichen. Diese Ausweichbewegung 70 hat keinen Einfluss auf die Axialposition der zugeordneten Schaltstange 50a. Auch andere Schaltnocken können zwischenzeitlich ihre zugeordneten verschwenkbaren Abschnitte ausgelenkt haben, während die Gangstufe R angewählt worden ist.

Nachdem die jeweilige Gangstufe eingelegt ist (Position R der weiteren Schubstange 50a in Fig. 3), bleibt diese Gangstufe eingelegt, bis mittels des Schaltnockens 64-4 eine Schubbewegung auf die gekoppelte Schaltstange 42a ausgeübt wird, und zwar mittels des Schaltnockens 64-4. Ausgehend aus der in Fig. 3 dargestellten Position ist hierbei die Schaltwelle 60 wiederum in der Wählrichtung W so weit zu drehen, bis sich der Schaltnocken 64-4 in der Position befindet, die in Fig. 3 dem Schaltnocken 64-R zugeordnet ist.

Aufgrund der Tatsache, dass nach dem Einlegen einer Gangstufe (beispielhaft Gangstufe R in Fig. 2) diese Gangstufe eingelegt bleibt, wenn ein Wählvorgang erfolgt, kann beispielsweise in dem anderen Teilgetriebe eine weitere Gangstufe eingelegt werden, beispielsweise die Gangstufe 1 , indem die Schaltwelle 60 in Wählrichtung W bewegt wird, bis der Schaltnocken 64-1 sich in der Ausgangsposition für einen Schaltvorgang befindet. Anschließend kann die Schaltwelle in Schaltrichtung S bewegt werden, um die Schubstange 42 in die Schaltposition SP zu bewegen, die der Gangstufe 1 zugeordnet ist.

Aufgrund der Tatsache, dass die Schaltnocken über den Umfang verteilt angeordnet sind, ist es möglich, gezielt jeweils nur eine Schubstange in der ersten Längsrichtung 44 zu bewegen, wobei die anderen Schubstangen während dieses Überganges unbewegt bleiben.

Die Schaltnocken 64 und die verschwenkbaren Abschnitte 56 bilden jeweils gemeinsam eine Freilauf-Mitnehmereinrichtung 72, die dadurch gekennzeichnet ist, dass bei einem Verdrehen der Schaltwelle 60 in der Schaltrichtung S eine Schubstange in einer ersten Längsrichtung mitgenommen wird, wohingegen bei einer Verdrehen der Schaltwelle 60 in der Wählrichtung W eine Entkopplung der Stangen von der Schaltwelle erfolgt.

In den Figuren 4 bis 6 ist eine Abwandlung der in den Figuren 2 und 3 gezeigten Schaltanordnung 22' gezeigt, die hinsichtlich Aufbau und Funktionsweise generell der Schaltanordnung 22' der Figuren 2 und 3 entspricht. Gleiche Elemente sind daher durch gleiche Bezugszeichen gekennzeichnet. Im Folgenden werden im Wesentlichen die Unterschiede erläutert.

In den Figuren 4 bis 6 ist gezeigt, dass an der Schaltwelle 60 Schaltnocken 64-3, 64-2 einer ersten Schaltsequenz 24-1" ausgebildet sind, die vorliegend als Rückschaltsequenz ausgebildet ist. Bei einem Getriebe, das mit dieser Schaltanordnung 22" verbunden ist, kann eine Schubstange 42(2/4) Gangstufen 2 und 4 zugeordnet sein, und eine in Zeichnungsebene dahinterliegende Schubstange 42(3/5) kann Gangstufen 3 und 5 zugeordnet sein. Die Nockenfolgeabschnitte 57" dieser Schubstangen sind dabei starr mit den jeweiligen Grundkörpern gekoppelt, also nicht über Scharniere 68 damit verbunden.

Die Anordnung der Schubstangen 42 und der Nocken der Schaltwelle 60 ist dabei so gewählt, dass ein Schaltnocken nach einem erfolgten Schaltvorgang unter der zugeordneten Schubstange durchtauchen kann, so dass anschließend ein in Umfangsrichtung folgender Schaltnocken die jeweilige nachfolgende Gangstufe einlegen kann. In den Figuren 4 bis 6 ist dies anhand der Gangstufen 3 und 2 dargestellt.

Zunächst befindet sich der Schaltnocken 64-3 für die Rückwärtsgangstufe 3 in einer Position vor Durchführung eines Schaltvorganges mittels der Schubstange 42(3/5).

Dahinter liegt in Umfangsrichtung ein Schaltnocken 64-2 für die Gangstufe 2. Ein Verdrehen der Schaltwelle S aus der in Fig. 4 gezeigten Position führt zu einem Schaltvorgang, wie es in Fig. 5 gezeigt ist, wobei die Schubstange 42(3/5) in der ersten Längsrichtung 44 versetzt wird.

Der Schaltvorgang ist in Fig. 6 abgeschlossen. Es ist zu erkennen, dass die Gangstufe 3 eingelegt ist (Schaltweg d). Aufgrund der Abmessungen des Schaltnockens 64-3 und der erfolgten Lage der Schubstange 42(3/5) kann nun der Schaltnocken 64-3 bei einem Weiterdrehen in Schaltrichtung S unter der Schubstange 42(3/5) hindurchtauchen, bis der nachfolgende Schaltnocken 64-2 an seiner zugeordneten Schubstange 42(4/2) anliegt. Bei einem Weiterdrehen der Schaltwelle 60 in Schaltrichtung S kann folglich zusätzlich zu der Gangstufe 3 die Gangstufe 2 eingelegt werden.

Bei der Schaltanordnung 22' der Figuren 2 und 3 wird eine erste Schaltsequenz 24-1' durch eine geschickte Anordnung der Schaltnocken 64 über den Umfang und in Längsrichtung der Schaltwelle erreicht. Obgleich die Gangstufen bei der Schaltanordnung 22' generell durch die Möglichkeit des Wählens W wahlfrei angewählt werden können, also nicht notwendigerweise streng sequenziell aufeinanderfolgend eingelegt werden müssen, ist doch durch die Anordnung der Schaltnocken 64-1 bis 64-7 eine erste Schaltsequenz eingerichtet.

Um diesen Vorteil auch für zweite Schaltsequenzen zu realisieren, beinhaltet die Schaltanordnung 22' eine erste weitere Schaltsequenz 64-2', die den Gangstufen 5, 3, 2 zugeordnet ist, sowie eine zweite weitere Schaltsequenz 24-3, die den Gangstufen 7, 4, 3 zugeordnet ist.

Die entsprechenden Schaltnocken sind in Fig. 2 bei 24-2' bzw. 24-3 schematisch angedeutet. Deren Anordnung an der Schaltwelle 60 ist rein beispielhaft zu verstehen und soll lediglich das Grundprinzip verdeutlichen, dass durch eine weitere Schaltsequenz einer Gangstufe bzw. einer Schubstange nicht ein einzelner Schaltnocken zugeordnet ist (wie beispielsweise 64-5 für die erste Schaltsequenz 24-1 '), sondern, sofern diese Gangstufe in einer weiteren Schaltsequenz beinhaltet ist, gegebenenfalls noch einer oder weitere Schaltnocken (im Beispiel der Fig. 2 ein weiterer Schaltnocken für die Vorwärts- gangstufe 5 im Rahmen der ersten weiteren Schaltsequenz 24-2' und noch ein Nocken für die Vorwärtsgangstufe 5 im Rahmen der zweiten weiteren Schaltsequenz 24-3).

Mit den weiteren Schaltsequenzen 24-2', 24-3 können gestützte oder nicht gestützte Mehrfachschaltungen durchgeführt werden. Eine gestützte Mehrfachrückschaltung beinhaltet eine Schaltung, bei der zwischenzeitlich eine Gangstufe in dem anderen Teilgetriebe eingelegt wird (also beispielsweise bei einer Mehrfachrückschaltung 5 nach 3 die Vorwärtsgangstufe 2, oder bei einer Mehrfachrückschaltung von 7 nach 5 die Vorwärtsgangstufe 4).

Es sind jedoch auch nicht gestützte Mehrfachrückschaltungen oder - hochschaltungen unter Zug oder auch unter Schub realisierbar.

Bei der Schaltanordnung 22" der Figuren 4 bis 6 ist es möglich, die Schubstangen deutlich einfacher auszubilden. Denn in einer alternativen (nicht dargestellten) Ausgestaltung weist die Schaltanordnung eine weitere Schaltwelle auf, die an dem entgegengesetzten Ende der jeweiligen Schubstangen angeordnet ist und dazu ausgebildet ist, die Schubstangen in der entgegengesetzten Richtung zu bewegen. Hierdurch kann die Anzahl der Schubstangen halbiert werden. Dieses Beispiel ist in den Figuren 4 bis 6 dargestellt. Hierbei ist eine Schubstange 42(2/4) sowohl der Gangstufe 2 als auch der Gangstufe 4 zugeordnet. In den Figuren 4 bis 6 ist nur eine Schaltwelle 60 gezeigt, die einen Nocken 64-2 beinhaltet, mittels der die Schubstange 42(2/4) in eine Position zum Einrichten der Vorwärtsgang-stufe 2 bewegt werden kann. Zum Bewegen der Schubstange 42(2/4) in die entgegengesetzte Längsrichtung zum Einlegen der Vorwärtsgangstufe 4 kann entweder eine weitere Schaltwelle am entgegengesetzten Ende der Schubstange angeordnet sein, oder die Schubstange 42(2/4) kann mit einer weiteren Schubstange gekoppelt sein, ähnlich wie in den Figuren 2 bis 3.

In den Figuren 4 bis 6 ist nur eine erste Schaltsequenz 24-1" dargestellt. Bei 64-3" ist jedoch schematisch angedeutet, dass an der Schaltwelle 60 ein weiterer Schaltnocken für die Vorwärtsgangstufe 3 vorgesehen sein kann (und gegebenenfalls weitere Schaltnocken für beispielsweise Gangstufen 5, 2 und/oder weitere Schaltnocken für Gangstufen 7, 4, 5, ähnlich wie in den Ausführungsformen der Fig. 2). Aus Übersichtlichkeitsgründen ist die Darstellung derartiger weiterer Zusatz-Schaltnocken in den Figuren 4 bis 6 jedoch unterlassen worden.

Bei den Ausführungsformen der Figuren 2 bis 6 kann eine Vorauswahl V einer Schaltsequenz beispielsweise durch ein Verdrehen der Schaltwelle 60 in der Wählrichtung W erfolgen, kann jedoch auch durch andere Relativbewegungen zwischen Schaltwelle und Schubstangen 42 erfolgen.

Bei der Ausführungsform der Figuren 4 bis 6 versteht sich, dass zu diesem Zweck die Nockenfolgerabschnitte 57" auch über Scharniere mit den jeweiligen Grundkörpern der Schubstangen verbunden sein können, ähnlich wie bei der Ausführungsform der Figuren 2 und 3.

Alternativ zu verschwenkbaren Abschnitten 56 an den Schubstangen ist es jedoch auch möglich, die Nocken radial verschiebbar zu machen, so dass diese bei Wählbewegungen gegenüber einer starren Schaltstange (wie in Fig. 4 gezeigt) ausweichen können. Ein derartiger Ausweichvorgang ist in Fig. 4 schematisch für einen nicht näher bezeichneten Schaltnocken 64 bei 72 gezeigt.

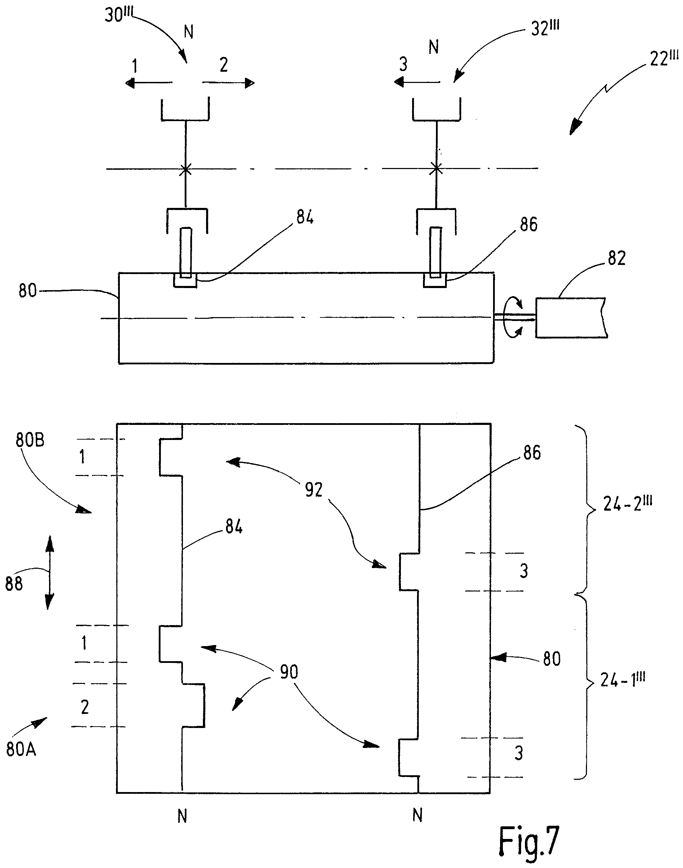

In Fig. 7 ist eine weitere Ausführungsform einer Schaltanordnung 22"' gezeigt, die eine Schaltwalze 80 beinhaltet, die mittels eines Elektromotors 82 angetrieben ist. Die Schaltwalze 80 beinhaltet eine erste Schaltkontur 84, die einem ersten Schaltkupplungspaket für die Gangstufen 1 und 2 zugeordnet ist, sowie eine zweite Schaltkontur 86, die einem zweiten Schaltkupplungspaket für die Vorwärtsgangstufe 3 zugeordnet ist.

In Fig. 7 ist die Schaltwelle 80 zudem in einer Abwicklung gezeigt, bei der die Schaltkonturen 84, 86 besser dargestellt sind. Es ist zu erkennen, dass in diesem Fall die Schaltkonturen 84, 86 jeweils eine erste vorgegebene Schaltsequenz 24-1"' definieren, die Basis-Schaltmerkmale 90 an den Schaltkonturen 84, 86 beinhaltet, die so ausgebildet sind, dass die Gangstufen 1 bis 3 rein sequenziell angewählt werden, also in der Reihenfolge 1 , 2, 3, und wieder zurück 3, 2, 1.

In Fig. 7 ist zu erkennen, dass bei der Abwicklung der Schaltwalze 80 jedoch an der Schaltwalze noch eine weitere Schaltsequenz 24-2"' ausgebildet ist, die ausschließlich den Gangstufen 1 und 3 zugeordnet ist, derart, dass dann, wenn diese weitere Schaltsequenz 24-2'" angewählt ist, eine Mehrfachrückschaltung von 3 nach 1 oder eine Mehrfachhochschaltung von 1 nach 3 möglich ist, ohne zwischenzeitlich die Gangstufe 2 schalten zu müssen. Die zu diesem Zweck im Rahmen der weiteren Schaltsequenz 24-2'" an den Umfangskonturen 84, 86 ausgebildeten zusätzlichen Schaltmerkmale sind in Fig. 7 mit 92 bezeichnet.

Drehbewegungen der Schaltwelle 80 führen zum Versetzen von nicht näher bezeichneten Nockenfolgern in den Schaltkonturen 84, 86, wobei die Nockenfolger typischerweise mit Schaltmuffen der Schaltkupplungsanordnungen 30"', 32'" gekoppelt sind.

Die Umfangsrichtung der Schaltwelle 80 ist in Fig. 7 mit 88 bezeichnet.

## Patentansprüche

1. Schaltanordnung (22) für einen eine Mehrzahl von Gangstufen (1-3; 1-7) aufweisenden Kraftfahrzeugantriebsstrang (10), wobei die Schaltanordnung (22) eine Schaltaktuatorik (24) mit einer mechanisch vorgegebenen Schaltsequenz (24-1) für die Mehrzahl von Gangstufen (1-3; 1-7) aufweist, wobei die Schaltsequenz (24-1) Gangwechsel nur sequentiell erlaubt, wobei die Schaltaktuatorik so ansteuerbar ist, dass im Fahrbetrieb in Abhängigkeit von wenigstens einem Betriebsparameter (26-6) jeweils eine der Mehrzahl von Gangstufen (1-3; 1-7) geschaltet ist,
wobei die Schaltaktuatorik (24) wenigstens eine weitere mechanisch vorgegebene Schaltsequenz (24-2; 24-3) für eine vordefinierte Teilmenge (1 , 3; 5, 2, 3; 7, 4, 5) der Mehrzahl von Gangstufen aufweist, wobei die weitere Schaltsequenz (24-2; 24-3) wenigstens eine Mehrfachschaltung beinhaltet, die zwischen nicht benachbarten Gangstufen erfolgt, wobei die Schaltaktuatorik (24) so ansteuerbar ist, dass in Abhängigkeit von wenigstens einem weiteren Betriebsparameter (26-7) die eine Schaltsequenz (24-1 ) oder die weitere Schaltsequenz (24-2; 24-3) vorgewählt ist,
wobei die Schaltaktuatorik eine Schaltdrehanordnung (60; 80) aufweist, an der Basis-Schaltmerkmale (64; 90) zur Einrichtung der einen Schaltsequenz (24-1) ausgebildet sind, die bei einer Drehung der Schaltdrehanordnung (60; 80) sequentiell in Wirkung gelangen, um die Mehrzahl von Gangstufen des Antriebsstranges (10) einzulegen, und wobei an der Schaltdrehanordnung (60; 80) zusätzlich zu den Basis-Schaltmerkmalen (64; 90) Zusatz-Schaltmerkmale (24-2'; 24-3'; 92) zur Einrichtung der weiteren Schaltsequenz (24-2; 24-3) ausgebildet sind, die bei einer Drehung der Schaltdrehanordnung (60; 80) nacheinander in Wirkung Eingriff gelangen, um die vordefinierte Teilmenge der Mehrzahl von Gangstufen des Antriebsstranges (10) einzulegen,
**dadurch gekennzeichnet, dass** die Basis-Schaltmerkmale (64; 90) und die Zusatz-Schaltmerkmale (24-2'; 24-3'; 92) an der Schaltdrehanordnung (60; 80) in Umfangsrichtung beabstandet zueinander angeordnet sind.

2. Schaltanordnung nach Anspruch 1, **dadurch gekennzeichnet, dass** die Basis-Schaltmerkmale und die Zusatz-Schaltmerkmale an der Schaltdrehanordnung in axialer Richtung, in Richtung der Schaltwellenachse (61) beabstandet zueinander angeordnet sind.

3. Schaltanordnung nach Anspruch 1 oder 2, **dadurch gekennzeichnet, dass** die Schaltdrehanordnung zwei Schaltdrehglieder (80A, 80B) aufweist, die unabhängig voneinander drehbar sind, wobei die Basis-Schaltmerkmale (90) an wenigstens einem Schaltdrehglied (80A) ausgebildet sind und wobei die Zusatz-Schaltmerkmale (92) an dem anderen Schaltdrehglied (80B) ausgebildet sind.

4. Schaltanordnung nach einem der Ansprüche 1-3, **dadurch gekennzeichnet, dass** die Schaltaktuatorik (22") eine Schaltwalze (80) mit wenigstens einer Schaltkontur (84, 86) aufweist.

5. Schaltanordnung nach einem der Ansprüche 1-4, **dadurch gekennzeichnet, dass** die Schaltaktuatorik (22') eine Schaltwelle (60) mit in Axialrichtung und in Umfangsrichtung verteilt angeordneten Schaltnocken (64) aufweist.

6. Schaltanordnung nach Anspruch 5, **dadurch gekennzeichnet, dass** an der Schaltwelle (60) Basis-Schaltnocken (64) zum Einrichten der einen Schaltsequenz (24-1') sowie Zusatz-Schaltnocken (24-2'; 24-3) zur Einrichtung der weiteren Schaltsequenz ausgebildet sind.

7. Schaltanordnung nach Anspruch 5 oder 6, **dadurch gekennzeichnet, dass** die Schaltwelle (60) in einer Drehrichtung (S) zum Durchführen eines Schaltvorganges verdrehbar ist.

8. Verfahren zum Betätigen einer Schaltanordnung (22) für einen eine Mehrzahl von Gangstufen (1-3; 1-7) aufweisenden Kraftfahrzeugantriebsstrang (10) nach einem der Ansprüche 1 bis 7,
wobei die Schaltaktuatorik (24) so angesteuert wird, dass im Fahrbetrieb in Abhängigkeit von wenigstens einem Betriebsparameter (26-6) jeweils eine der Mehrzahl von Gangstufen (1-3; 1-7) geschaltet ist,
wobei die Schaltaktuatorik (24) wenigstens eine weitere mechanisch vorgegebene Schaltsequenz (24-2; 24-3) für eine vordefinierte Teilmenge (1, 3; 5, 2, 3; 7, 4, 5) der Mehrzahl von Gangstufen aufweist,
wobei die weitere Schaltsequenz (24-2; 24-3) wenigstens eine Mehrfachschaltung beinhaltet, die zwischen nicht benachbarten Gangstufen erfolgt,
und wobei die Schaltaktuatorik (24) so angesteuert wird, dass in Abhängigkeit von wenigstens einem weiteren Betriebsparameter (26-7) die eine Schaltsequenz (24-1) oder die weitere Schaltsequenz (24-2; 24-3) vorgewählt wird.

9. Verfahren nach Anspruch 8, wobei der weitere Betriebsparameter (26-7) ein prädiktiver Betriebsparameter ist.

10. Verfahren nach Anspruch 8 oder 9, wobei der weitere Betriebsparameter (26-7) ausgewählt ist aus einem oder einer Kombination der folgenden Parameter:
Richtungswechsel, Kurvenfahrt, absolute Höhe, Höhendifferenz, Steigungsvorzeichen, Steigungswinkel, Straßenart, Straßenumfeld, Geschwindigkeitsbegrenzung, Fahrmodus, GPS-Parameter, Interfahrzeugkommunikation, aktuelle Gaspedalstellung.

## Claims

1. Shift assembly (22) for a motor vehicle powertrain (10) which has a plurality of gear stages (1-3; 1-7), the shift assembly (22) having a shift actuator system (24) with a mechanically predefined shift sequence (24-1) for the plurality of gear stages (1-3; 1-7), the shift sequence (24-1) permitting gear changes merely in a sequential manner, it being possible for the shift actuator system to be actuated in such a way that, during driving operation, in each case one of the plurality of gear stages (1-3; 1-7) is shifted in a manner which is dependent on at least one operating parameter (26-6), the shift actuator system (24) having at least one further mechanically predefined shift sequence (24-2; 24-3) for a predefined part quantity (1, 3; 5, 2, 3; 7, 4, 5) of the plurality of gear stages, the further shift sequence (24-2; 24-3) comprising at least one multiple shift operation which takes place between gear stages which are not adjacent, it being possible for the shift actuator system (24) to be actuated in such a way that the one shift sequence (24-1) or the further shift sequence (24-2; 24-3) is preselected in a manner which is dependent on at least one further operating parameter (26-7), the shift actuator system having a shift rotational assembly (60; 80), on which base shift features (64; 90) are configured to set up the one shift sequence (24-1), which base shift features (64; 90) come into effect sequentially in the case of a rotation of the shift rotational assembly (60; 80), in order to engage the plurality of gear stages of the powertrain (10), and, in addition to the base shift features (64; 90), additional shift features (24-2'; 24-3'; 92) for setting up the further shift sequence (24-2; 24-3) being configured on the shift rotational assembly (60; 80), which additional shift features (24-2'; 24-3'; 92) come into effect one after another in the case of a rotation of the shift rotational assembly (60; 80), in order to engage the predefined part quantity of the plurality of gear stages of the powertrain (10), **characterized in that** the base shift features (64; 90) and the additional shift features (24-2'; 24-3'; 92) are arranged on the shift rotational assembly (60; 80) such that they are spaced apart from one another in the circumferential direction.

2. Shift assembly according to Claim 1, **characterized in that** the base shift features and the additional shift features are arranged on the shift rotational assembly such that they are spaced apart from one another in the axial direction, in the direction of the shift shaft axis (61).

3. Shift assembly according to Claim 1 or 2, **characterized in that** the shift rotational assembly has two shift rotary members (80A, 80B) which can be rotated independently of one another, the base shift features (90) being configured on at least one shift rotary member (80A), and the additional shift features (92) being configured on the other shift rotary member (80B).

4. Shift assembly according to one of Claims 1 to 3, **characterized in that** the shift actuator system (22") has a shift drum (80) with at least one shift contour (84, 86).

5. Shift assembly according to one of Claims 1 to 4, **characterized in that** the shift actuator system (22') has a shift shaft (60) with shift cams (64) which are arranged distributed in the axial direction and in the circumferential direction.

6. Shift assembly according to Claim 5, **characterized in that** base shift cams (64) for setting up the one shift sequence (24-1') and additional shift cams (24-2'; 24-3) for setting up the further shift sequence are configured on the shift shaft (60).

7. Shift assembly according to Claim 5 or 6, **characterized in that** the shift shaft (60) can be rotated in a rotational direction (S) in order to carry out a shift operation.

8. Method for actuating a shift assembly (22) for a motor vehicle powertrain (10) which has a plurality of gear stages (1-3; 1-7) according to one of Claims 1 to 7, the shift actuator system (24) being actuated in such a way that, during driving operation, in each case one of the plurality of gear stages (1-3; 1-7) is shifted in a manner which is dependent on at least one operating parameter (26-6), the shift actuator system (24) having at least one further mechanically predefined shift sequence (24-2; 24-3) for a predefined part quantity (1, 3; 5, 2, 3; 7, 4, 5) of the plurality of gear stages, the further shift sequence (24-2; 24-3) comprising at least one multiple shift operation which takes place between gear stages which are not adjacent, and the shift actuator system (24) being actuated in such a way that the one shift sequence (24-1) or the further shift sequence (24-2; 24-3) is preselected in a manner which is dependent on at least one further operating parameter (26-7).

9. Method according to Claim 8, the further operating parameter (26-7) being a predictive operating parameter.

10. Method according to Claim 8 or 9, the further operating parameter (26-7) being selected from one or a combination of the following parameters: direction change, driving around a bend, absolute altitude, altitude difference, slope sign, slope angle, road type, road periphery, speed limit, driving mode, GPS parameter, inter-vehicle communications, current accelerator pedal position.

## Revendications

1. Système de changement de vitesse (22) pour une chaîne cinématique de véhicule automobile (10) présentant une pluralité de rapports de vitesse (1 à 3 ; 1 à 7), le système de changement de vitesse (22) présentant un ensemble d'actionneurs de changement de vitesse (24) ayant une séquence de changement de vitesse (24-1) prédéterminée mécaniquement pour la pluralité de rapports de vitesse (1 à 3 ; 1 à 7), la séquence de changement de vitesse (24-1) ne permettant que des changements de rapport séquentiels, dans lequel l'agencement d'actionneurs de changement de vitesse peut être piloté de telle sorte qu'en mode conduite, respectivement l'un de la pluralité de rapports de vitesse (1 à 3 ; 1 à 7) est passé en fonction d'au moins un paramètre de fonctionnement (26-6), dans lequel l'agencement d'actionneurs de changement de vitesse (24) présente au moins une autre séquence de changement de vitesse (24-2 ; 24-3) prédéterminée mécaniquement pour un sous-ensemble prédéfini (1, 3 ; 5, 2, 3 ; 7, 4, 5) de la pluralité de rapports de vitesse, dans lequel la séquence de changement de vitesse supplémentaire (24-2 ; 24-3) comprend au moins un changement de vitesses multiples qui est effectué entre des rapports de vitesse non voisins, l'agencement d'actionneurs de changement de vitesse (24) pouvant être piloté de telle sorte qu'en fonction dudit au moins un autre paramètre de fonctionnement (26-7), ladite une séquence de changement de vitesse (24-1) ou la séquence de changement de vitesse supplémentaire (24-2 ; 24-3) est présélectionnée,
dans lequel l'agencement d'actionneurs de changement de vitesse présente un système de changement de vitesse rotatif (60 ; 80) sur lequel des fonctions de changement de vitesse de base (64 ; 90) sont réalisées pour établir ladite une séquence de changement de vitesse (24-1) et qui, en cas de rotation du système de changement de vitesse rotatif (60 ; 80), entrent en action successivement pour enclencher la pluralité de rapports de vitesse de la chaîne cinématique (10), et dans lequel, sur le système de changement de vitesse rotatif (60 ; 80), en plus des fonctions de changement de vitesse de base (64 ; 90), des fonctions de changement de vitesse auxiliaires (24-2' ; 24-3' ; 92) sont réalisées pour établir la séquence de changement de vitesse supplémentaire (24-2 ; 24-3) et qui, lors d'une rotation du système de changement de vitesse rotatif (60 ; 80), entrent en action successivement pour enclencher le sous-ensemble prédéfini de la pluralité de rapports de vitesse de la chaîne cinématique (10),
**caractérisé en ce que** les fonctions de changement de vitesse de base (64 ; 90) et les fonctions de changement de vitesse auxiliaires (24-2' ; 24-3' ; 92) sont disposées sur le système de changement de vitesse rotatif (60 ; 80) en étant espacées les unes par rapport aux autres dans la direction circonférentielle.

2. Système de changement de vitesse selon la revendication 1, **caractérisé en ce que** les fonctions de changement de vitesse de base et les fonctions de changement de vitesse auxiliaires sont disposées sur le système de changement de vitesse dans la direction axiale en direction de l'axe d'arbre de changement de vitesse (61) en étant espacées les unes par rapport aux autres.

3. Système de changement de vitesse selon la revendication 1 ou 2, **caractérisé en ce que** le système de changement de vitesse rotatif présente deux éléments de changement de vitesse rotatif (80A, 80B) qui peuvent tourner indépendamment l'un de l'autre, les fonctions de changement de vitesse de base (90) étant réalisées sur au moins un élément de changement de vitesse rotatif (80A) et les fonctions de changement de vitesse supplémentaires (92) étant réalisées sur l'autre élément de changement de vitesse rotatif (80B).

4. Système de changement de vitesse selon l'une quelconque des revendications 1 à 3, **caractérisé en ce que** l'agencement d'actionneurs de changement de vitesse (22") présente un cylindre de changement de vitesse (80) ayant au moins un profil de changement de vitesse (84, 86).

5. Système de changement de vitesse selon l'une quelconque des revendications 1 à 4, **caractérisé en ce que** l'agencement d'actionneurs de changement de vitesse (22') présente un arbre de changement de vitesse (60) muni de cames de changement de vitesse (64) disposées en étant réparties dans la direction axiale et dans la direction circonférentielle.

6. Système de changement de vitesse selon la revendication 5, **caractérisé en ce que** sur l'arbre de changement de vitesse (60) sont réalisées des cames de changement de vitesse de base (64) pour établir ladite une séquence de changement de vitesse (24-1'), ainsi que des cames de changement de vitesse auxiliaires (24-2' ; 24-3) pour établir la séquence de changement de vitesse supplémentaire.

7. Système de changement de vitesse selon la revendication 5 ou 6, **caractérisé en ce que** l'arbre de changement de vitesse (60) peut être amené à tourner dans une direction de rotation (S) pour effectuer une opération de changement de vitesse.

8. Procédé permettant d'actionner un système de changement de vitesse (22) pour une chaîne cinématique de véhicule automobile (10) présentant une pluralité de rapports de vitesse (1 à 3 ; 1 à 7) selon l'une quelconque des revendications 1 à 7,
dans lequel l'agencement d'actionneurs de changement de vitesse (24) est piloté de telle sorte qu'en mode conduite, en fonction d'au moins un paramètre opérationnel (26-6), respectivement l'un de la pluralité de rapports de vitesse (1 à 3 ; 1 à 7) est passé,
dans lequel l'agencement d'actionneurs de changement de vitesse (24) présente au moins une autre séquence de changement de vitesse (24-2 ; 24-3) prédéterminée mécaniquement pour un sous-ensemble prédéfini (1, 3 ; 5, 2, 3 ; 7, 4, 5) de la pluralité de rapports de vitesse,
dans lequel la séquence de changement de vitesse supplémentaire (24-2 ; 24-3) comprend au moins un changement de vitesse multiple qui est effectué entre des rapports de vitesse non voisins,
et dans lequel l'agencement d'actionneurs de changement de vitesse (24) est piloté de telle sorte qu'en fonction d'au moins un paramètre de fonctionnement supplémentaire (26-7), ladite une séquence de changement de vitesse (24-1) ou la séquence de changement de vitesse supplémentaire (24-2 ; 24-3) est présélectionnée.

9. Procédé selon la revendication 8, dans lequel le paramètre de fonctionnement supplémentaire (26-7) est un paramètre de fonctionnement prédictif.

10. Procédé selon la revendication 8 ou 9, dans lequel le paramètre de fonctionnement supplémentaire (26-7) est sélectionné parmi un ou une combinaison des paramètres suivants : changement de direction, conduite dans un virage, altitude absolue, différence d'altitude, signe de pente, angle de pente, type de route, environnement routier, limitation de vitesse, mode de conduite, paramètre GPS, communication entre véhicules, position d'accélérateur actuelle.
